(19) Europäisches Patentamt
European Patent Office
Office européen des brevets

(11) Publication number: **0 450 753 A2**

(12) **EUROPEAN PATENT APPLICATION**

(21) Application number: **91301353.8**

(22) Date of filing: **20.02.91**

(51) Int. Cl.5: **C08G 81/00**, C08G 75/14, C08G 69/42

(30) Priority: **04.04.90 US 504514**

(43) Date of publication of application: **09.10.91 Bulletin 91/41**

(84) Designated Contracting States: **BE DE FR GB**

(71) Applicant: **Tonen Chemical Corporation**
**1-1, Tsukiji 4-Chome**
**Chuo-Ku Tokyo(JP)**

(72) Inventor: **Akhtar, Sania**
**c/o Polymer Engineering Center**
**The University of Akron, Ohio 44325(US)**
Inventor: **White, James L.**
**c/o Polymer Engineering Center**
**The University of Akron, Ohio 44325(US)**

(74) Representative: **Holmes, Michael John et al**
**Frank B. Dehn & Co. Imperial House 15-19**
**Kingsway**
**London WC2B 6UZ(GB)**

(54) **Poly (arylene sulfide) resin composition.**

(57) A unitary thermoplastic composition comprising (a) a poly (arylene sulfide) and (b) an amorphous polyamide of partially aromatic character, preferably having 5-95 weight % of (a). Such a composition shows improved mechanical strength, e.g. impact strength.

EP 0 450 753 A2

The invention relates to high-impact strength poly (arylene sulfide) resin binary blends. The invention further pertains to high-impact strength polymer blends containing a poly (arylene sulfide) resin and an amorphous polyamide.

Poly (arylene sulfides) are a unique class of materials, produced commercially, that have found applications in a variety of areas. Among them, poly (phenylene sulfides) have high melting points, outstanding chemical resistance, thermal stability and non-flammability. The polymer is characterized by high stiffness and good retention of mechanical properties at elevated temperatures.

Amorphous polyamides exhibit the typical properties of the conventional polyamides, i.e., high stiffness, tensile strength and toughness, good insulation and non-tracking characteristics, and good resistance to numerous solvating, swelling and saponifying media. Non-typical properties are transparency, a yellowish color, little creep, and mechanical as well as electrical properties which are nearly independent of the conditioning state, i.e., the equilibrium moisture content.

For certain thermoplastic applications, alloys of two or more resins may exhibit a better balance of properties. For example, by admixing a resin having certain desirable physical properties with a second resin having other desirable physical properties, it is hoped to find resin blends that have inherited at least some of the desired physical properties from each of the resins.

As such polymer alloys, polymer alloys of poly (arylene sulfide) with other resins show excellent mechanical properties such as impact strength, and various poly (arylene sulfide)-based polymer alloys have been proposed.

Japanese Patent Laid-Open No. 53-69255 discloses a polyphenylene sulfide resin composition comprising 60-97 weight % of a polyphenylene sulfide resin and 40-3 weight % of a polyamide resin.

Japanese Patent Laid-Open No. 55-45704 discloses a thermoplastic resin composition comprising 30-97 parts by weight of a poly (arylene sulfide) resin, and 70-3 parts by weight of a low-crystallinity thermoplastic resin selected from polycarbonates, polysulfones, polyamides and polyesters, the composition further containing 3-60 weight % of carbon fibers and/or graphite, and 0-20 weight % of fluorine resins.

However, poly (arylene sulfide) compositions having a better combination of mechanical properties such as tensile strength, impact strength, etc. have been desired.

It is an object of the present invention to provide high-impact strength polymer alloys containing a poly (arylene sulfide) and certain additional resins.

It is also an object of the present invention to provide alloys of poly (arylene sulfide) resin-containing thermoplastic alloys which have better impact resistance than that of poly (arylene sulfide).

Another object of this invention is to desirably modify one or more physical properties, such as tensile strength, elongation and impact resistance of poly (arylene sulfide).

A principal feature of this invention is that polymeric alloys of poly (arylene sulfide) resins and amorphous polyamides are disclosed which possess high temperature resistance characteristics, good mechanical properties and are easily fabricated using conventional thermoplastic processing techniques.

Thus, according to one aspect of the present invention there is provided a unitary thermoplastic composition comprising:

(a) poly (arylene sulfide), and

(b) an amorphous polyamide of partially aromatic character.

The poly (arylene sulfide) resin used in the present invention may be formed from recurring units of the formula:

-[ArS] -,

wherein "-Ar-" is a divalent aromatic group, preferably represented by the following formula:

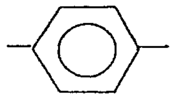 , 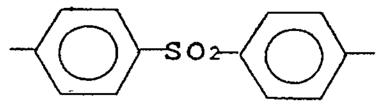 ,

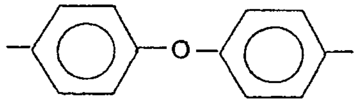 , 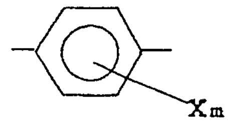 ,

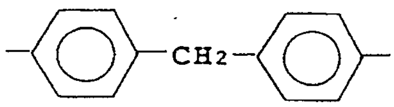 , and 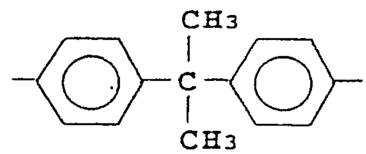

wherein X denotes F, Cl, Br or $CH_3$ and m denotes an integer of 1-4.

An especially typical poly (arylene sulfide) resin is polyphenylene sulfide having a repeating unit represented by the formula:

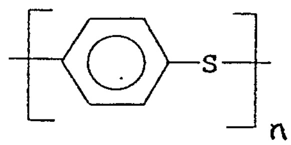 .

The poly (arylene sulfide) used in the present invention usually has a melt viscosity of 20-30,000 poise, preferably 100-15,000 poise at 300 °C when measured by a flow tester (L/D = 10, $\gamma$ = 200 $sec^{-1}$).

The amorphous polyamides are obtained from at least one aromatic or aliphatic dicarboxylic acid, and at least one diamine selected from the class consisting of (i) normal aliphatic diamines, and (ii) cycloaliphatic diamines containing at least one cycloaliphatic ring, and/or at least one lactam.

Preferred dicarboxylic acids are isophthalic acid, terephthalic acid, adipic acid, azelaic acid, cyclohexane-1,4-dicarboxylic acid, naphthalene-2,6-dicarboxylic acid, etc. Especially preferred are aromatic dicarboxylic acids, particularly mixtures containing 60-70 mol % isophthalic acid and 40-30 mol % terephthalic acid.

Preferred normal aliphatic diamines are butylenediamine, hexamethylenediamine, undecamethylenediamine, dodecamethylenediamine, 2,2,4-trimethylhexamethylenediamine, 2,4,4-trimethylhexamethylenediamine, m-xylenediamine, bisamine A, 4,4'-diamino-3,3'-dimethyldicyclo-hexylenemethane, norbornanediamine, isophoronediamine, etc.

The cycloaliphatic diamines which can be used in the present invention include:

bis (4-aminocyclohexyl) methane (PACM, hereinafter),
bis (4-amino-3-methyl-5-ethylcyclohexyl) methane,
bis (4-amino-3,5-diethylcyclohexyl) methane,
bis (4-amino-3-methyl-5-isopropylcyclohexyl) methane,
bis (4-amino-3,5-diisopropylcyclohexyl) methane,
bis (4-amino-3,5-dimethylcyclohexyl) methane,
bis (4-amino-3-methylcyclohexyl) methane,
bis (4-amino-3-ethylcyclohexyl) methane, and
bis (4-amino-3-isopropylcyclohexyl) methane.

PACM is available as a mixture of three stereoisomers: cis, cis; cis, trans; and trans, trans. Any isomer mixture can be used.

Other cycloaliphatic diamines may be used, e.g. diamines having further alkyl substituents on the cyclohexane rings or in which, if desired, the $-CH_2-$ group between the cyclohexane rings is replaced by a

$C_{2-4}$ alkylene chain such as ethylene, propylene, isopropylene or butylene. In general, it is preferred that the alkyl groups on the cyclohexane rings have 1-8, more preferably 1-4, and more preferably 1-3, carbon atoms. It is especially preferred that these alkyl groups should comprise a combination of methyl with ethyl or isopropyl groups. If appropriate, mixtures of diamines, and various isomeric mixtures of particular diamines may be used.

The aliphatic diamines and the cycloaliphatic diamines may be used alone, but it is preferable to use them in combination. Especially preferred are mixtures containing 20-35 mol % of cycloaliphatic diamines such as PACM isomers and 80-65 mol % of aliphatic diamines such as hexamethylenediamine.

The amorphous polyamides may be derived from substantially equimolar amounts of dicarboxylic acids and diamines. Especially preferred amorphous polyamides may be derived from 20-48 (more preferably 25-45) mol % of the normal aliphatic diamine, 2-30 (more preferably 5-25) mol % of the cycloaliphatic diamine, and 50 mol % of dicarboxylic acid, e.g. 40-50 mol % of isophthalic acid and 0-10 mol % terephthalic acid.

Preferred examples of the amorphous polyamides are as follows:

1. HI,
2. HT,
3. HI/HT,
4. HI/HT/PACM-I/PACM-T,
5. HI/HT/MXD-I/MXD-T,

wherein

H: Hexamethylenediamine,
I: Isophthalic acid,
T: Terephthalic acid,
MXD : m-Xylenediamine, and
PACM: Bis (4-aminocyclohexyl) methane.

The amorphous polyamides have glass transition temperatures above 140° C, particularly above 150° C.

The amorphous polyamides generally have no distinct melting point and a heat of fusion of less than 1 cal/gram. The heat of fusion is conveniently determined by use of a differential scanning calorimeter (DSC). A suitable calorimeter is The Du Pont Company's 990 thermal analyzer, Part No. 990000 with cell base II, Part No. 990315, and DSC cell, Part No. 900600. With this instrument, heat of fusion can be measured at a heating rate of 20° C per minute.

These amorphous polyamides are disclosed in U.S. Patent 4,536,541, GB 2194540 and Japanese Patent Laid-Open No. 63-57668.

The blends (alloys) of our invention can be prepared using conventional techniques known in the art for producing unitary compositions from two or more resins. For example, the alloys can be formed by mixing suitable amounts or proportions of the dry powders or pellets of each of the resins by tumbling, followed by further mixing in a suitable compounding device such as an extruder for melt extrusion. The mixing that takes place during conventional injection molding also will suffice to produce the alloys of resins. Other known methods of forming alloys of resins which can be employed include, for example, melt mixing in a laboratory internal mixer. To form the alloys, the temperature has to be at least high enough that the resins employed melt, but the temperature should be kept sufficiently low to ensure that none of the resins will be degraded. The resulting alloys can be granulated or pelletized if desired for convenience in handling or subsequent molding operations.

The amounts of each of the polymers in our polymer alloys can vary over a wide range, depending on desired properties. The ratios of the two polymer components in our alloys should be that which is effective to desirably modify one or more physical properties of the poly (arylene sulfide).

Generally, the polymer alloys will contain about 5 to 95 weight percent, preferably about 10 to 90 weight percent, most preferably 30 to 85 weight percent of poly (arylene sulfide), based on the weight of the blend composition excluding other compounding components such as fillers, colorants, and fibers.

The polymer alloys can contain a suggested range of about 5 to 95 weight percent, preferably 10 to 90 weight percent, more preferably 15 to 70 weight percent of the amorphous polyamide resin, on the same basis.

The polymer alloys can also contain reinforcing fibers and/or fillers, etc. The preferred reinforcing fibers are glass fibers, carbon fibers, etc. The amount of the glass fibers, carbon fibers, etc. may generally be up to 80 weight % based on the total weights of the polymer alloys. The fillers may be talc, mica, potassium titanate, etc. in amounts of up to 80 weight % based on the total weights of the polymer alloys.

The blend compositions can contain additional optional components such as mold corrosion inhibitors, pigments, processing aids and the like.

Examples

Examples provided are intended to assist in a further understanding of the present invention. Particular materials and conditions employed are intended to be further illustrative of our invention.

The examples show that blends of poly (arylene sulfide) and aromatic polyamide improve such properties as elongation to break and impact strength when compared with an alloy containing poly (arylene sulfide) alone.

Example 1

A series of homogeneous physical blends was prepared by mixing poly (phenylene sulfide) (PPS) powder, having a melting point of 294°C, with two types of amorphous polyamide (i) Zytel® type 330 having a specific gravity of 1.18 and a Tg of 127°C, and (ii) Grilamid® (type TR 55) having a specific gravity of 1.06 and a Tg of 160°C. Zytel® (type 330) was obtained from DuPont, and Grilamid (Type TR 55) from A. G. Chemie. These are of partially aromatic character. The structure of Zytel® type 330 is reported to be a recurring unit of the formula:

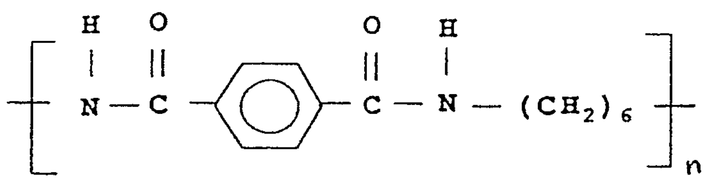

The PPS was dried at 120°C for 6 hours in the air while the amorphous polyamides were dried for 24 hours at 70°C. The appropriate weight of each polymer was taken and thoroughly mixed. Each blend of polymers was extruded at 295°C from a Werner-Pfleiderer ZSK-30 twin screw extruder to form granules after passing through a pelletizer. Prior to injection molding, the pellets were first dried in air at 100°C for 24 hours and then in vacuum at 120°C for 48 hours. Test specimens of each blend were prepared by injection molding. The results of physical tests on the specimens are presented in Table 1.

Table 1

Mechanical Properties of PPS-Amorphous Polyamide Binary Blends

| Run No. | 1 | 2 | 3 | 4 | 5 | 6 | 7 | 8 | 9 |
|---|---|---|---|---|---|---|---|---|---|
| PPS, Wt % | 100 | 70 | 50 | 30 | 0 | 70 | 50 | 30 | 0 |
| Zytel Type 330, Wt % | 0 | 30 | 50 | 70 | 100 | 0 | 0 | 0 | 0 |
| Grilamid Type TR 55, Wt % | 0 | 0 | 0 | 0 | 0 | 30 | 50 | 70 | 100 |
| Tensile strength at yield, MPa (1) | - | - | - | - | 94 | - | - | - | 80 |
| Tensile strength at break, MPa (2) | 65 | 39 | 64 | 72 | 67 | 56 | 68 | 72 | 54 |
| Elongation, % (3) | 5 | 3 | 5 | 6 | 123 | 5 | 8 | 8 | 36 |
| Modulus at 3% elongation, MPa (4) | 1620 | 1450 | 1436 | 1400 | 1166 | 1212 | 1102 | 1095 | 976 |
| Izod impact strength (notched), J /M (5) | 36 | 14 | 36 | 59 | 50 | 32 | 46 | 50 | 68 |

Note (1): ASTM D638
(2): ASTM D638
(3): ASTM D638
(4): ASTM D638
(5): ASTM D256

The data in Table 1 show that the homogeneous binary blends of PPS and amorphous polyamide have high elongation to break and impact strength. Except Run (2) and Run (6) all other binary blends show a higher elongation to break and in most cases higher impact strength and tensile strength than the original PPS (Run 1).

As the data indicate, binary blends of PPS/amorphous polyamide show a marked improvement in the physical properties examined.

It is to be understood that the foregoing detailed description is given merely by way of non-limiting illustration.

## Claims

1. A unitary thermoplastic composition comprising:
   (a) poly (arylene sulfide),
   (b) an amorphous polymide of partially aromatic character.

2. A composition as claimed in claim 1, wherein said poly (arylene sulfide) accounts for about 5 to 95 weight percent of the resin in the composition.

3. A composition as claimed in claim 1 or claim 2, comprising 5 to 95 weight % of said poly (arylene sulfide) and 5 to 95 weight % of said amorphous polyamide of partially aromatic character, based on the composition.

4. A composition as claimed in any one of the preceding claims wherein said poly (arylene sulfide) is formed from recurring units of the formula

   -[ArS]-

   wherein Ar is a divalent aromatic group.

5. A composition as claimed in any one of the preceding claims, wherein said amorphous polyamide of partially aromatic character is obtained from at least one aromatic or aliphatic dicarboxylic acid, and at least one diamine selected from (i) normal aliphatic diamines, and (ii) cycloaliphatic diamines containing at least one cycloaliphatic ring, and/or at least one lactam.

6. A composition as claimed in any one of the preceding claims, further comprising a filler material and/or a reinforcing material.

7. A composition as claimed in any one of the preceding claims, wherein said composition is produced by forming an approximately homogeneous mixture of the resins (a) and (b) employed and then mixing said resins at a temperature which is sufficiently high to cause the said resins to form said unitary composition and sufficiently low to prevent degradation of the resins.

8. A method of producing a unitary thermoplastic composition as claimed in claim 1, said process comprising mixing components (a) and (b) at a temperature which is sufficiently high to cause said components to form a unitary thermoplastic composition and suffioiently low to prevent degradation of said components.

9. A moulded article comprising or formed from a unitary thermoplastic composition as claimed in any one of claims 1 to 7.